# EUROPEAN PATENT APPLICATION

(11) **EP 4 664 857 A1**
(43) Date of publication of application: **17.12.2025**
(21) Application number: 25182325.8
(22) Date of filing: 12.06.2025
(51) Int. Cl.: H04L 67/12, H04W 4/80

(54) **METHOD AND APPARATUS FOR PROCESSING VEHICLE DATA, STORAGE MEDIUM, AND PROGRAM PRODUCT**

(30) Priority: 12.06.2024 CN 202410757246
(71) Applicant: Xiaomi EV Technology Co., Ltd., 100176 Beijing (CN)
(72) Inventor: YU, Fan, Beijing, 100176 (CN)
(74) Representative: Stöckeler, Ferdinand

(57) **Abstract**

The present invention relates to the technical field of vehicles and provides a method and apparatus for processing vehicle data, a storage medium, and a program product. The method includes: Obtaining (S21) a plurality of identifiers, wherein the plurality of identifiers comprise vehicle identifiers defined under different vehicle key protocols; Transmitting (S22) the plurality of identifiers to a server of a vehicle; and Receiving (S23) a processing result processed and transmitted by the server, wherein the processing result comprises one or more relations between the plurality of identifiers, wherein the plurality of identifiers having the relation are identifiers, defined under different vehicle key protocols, of the same vehicle. In this way, the relation between the plurality of identifiers can be determined by the vehicle server, such that the identifiers of the same vehicle can be determined. Thus, vehicle key data can be managed conveniently.

## Description

### TECHNICAL FIELD

The invention relates to the technical field of vehicles, and particularly relates to a method and apparatus for processing vehicle data, a storage medium, and a program product.

### BACKGROUND OF THE INVENTION

At present, digital vehicle keys have been widely used in various vehicle models. In related scenes, one device model is generally set by a device manufacturer to be compatible with a wide range of digital vehicle key protocols, in a bid to make its device compatible with vehicles on the market as much as possible. Thus, it is necessary to manage vehicle key data under various digital vehicle key protocols.

### SUMMARY OF THE INVENTION

To overcome problems in the related art, the present invention provides a method and apparatus for processing vehicle data, a storage medium, and a program product.

A first aspect of examples of the invention provides a method for processing vehicle data. The method includes: obtaining a plurality of identifiers, wherein the plurality of identifiers include vehicle identifiers defined under different vehicle key protocols; transmitting the plurality of identifiers to a server of the vehicle; and receiving a processing result processed and transmitted by the server, wherein the processing result includes one or more relations between the plurality of identifiers, and the plurality of identifiers having the relation are the identifiers, defined under different vehicle key protocols, of the same vehicle.

Optionally, the method includes: determining a plurality of target identifiers associated with one vehicle according to the one or more relations between the plurality of identifiers in the processing result; determining a plurality of vehicle keys corresponding to the plurality of target identifiers; and determining the plurality of vehicle keys to be vehicle keys of the one vehicle.

Optionally, the processing result comprises one or more identifier lists, the identifier lists comprise one or more of the plurality of identifiers, and the one or more of the plurality of identifiers in the same identifier list are associated with the same vehicle, and determining the plurality of target identifiers associated with the one vehicle according to the one or more relations between the plurality of identifiers in the processing result comprises: obtaining, for each of the identifier lists, the one or more of the plurality of identifiers in the identifier list; and determining the one or more of the plurality of identifiers in the identifier list to be the target identifiers associated with the one vehicle.

Optionally, the method includes: displaying the plurality of vehicle keys as the vehicle keys of the one vehicle in a user interface in an aggregated manner.

A second aspect of examples of the invention provides a method for processing vehicle data. The method includes: receiving a plurality of identifiers transmitted by a device, wherein the plurality of identifiers include vehicle identifiers defined under different vehicle key protocols; processing the plurality of identifiers, and obtaining a processing result, where the processing result includes one or more relations between the plurality of identifiers, and the plurality of identifiers having the relation are the identifiers, defined under different vehicle key protocols, of the same vehicle; and transmitting the processing result to the device.

Optionally, the processing the plurality of identifiers includes: determining, for each of the plurality of identifiers, a unique vehicle identifier associated with the identifier from a server of a vehicle; and establishing the one or more relations between the plurality of identifiers according to the unique vehicle identifier associated with each of the identifiers.

Optionally, the establishing the one or more relations between the plurality of identifiers according to the unique vehicle identifier associated with each of the identifiers includes: determining, for each of the identifiers, the unique vehicle identifier associated with the identifier, and obtaining a target vehicle identifier; saving, in response to determining that a target space exists in a storage space, the identifier into the target space; and creating, in response to determining that the target space does not exist in the storage space, a new target space in the storage space, and saving the identifier into the new target space, where the target space is configured to store an identifier associated with the target vehicle identifier.

Optionally, establishing the one or more relations between the plurality of identifiers according to the unique vehicle identifier associated with each of the identifiers includes: obtaining the identifier in the target space; and generating an identifier list of the target space according to the identifier in the target space. The one or more relations include the identifier list.

A third aspect of examples of the invention provides an apparatus for processing vehicle data. The apparatus includes: a first module configured to obtain a plurality of identifiers, wherein the plurality of identifiers include vehicle identifiers defined under different vehicle key protocols; a second module configured to transmit the plurality of identifiers to a server of a vehicle; and a third module configured to receive a processing result processed and transmitted by the server, wherein the processing result includes one or more relations between the plurality of identifiers, and the plurality of identifiers having the relation are the identifiers, defined under different vehicle key protocols, of the same vehicle.

Optionally, the apparatus for processing vehicle data includes: a seventh module configured to determine a plurality of target identifiers associated with one vehicle according to the one or more relations between the plurality of identifiers in the processing result; an eighth module configured to determine a plurality of vehicle keys corresponding to the plurality of target identifiers; and a ninth module configured to determine the plurality of vehicle keys to be vehicle keys of the one vehicle.

Optionally, the processing result comprises one or more identifier lists, the identifier lists comprise one or more of the plurality of identifiers, and the one or more of the plurality of identifiers in the same identifier list are associated with the same vehicle. The seventh module includes: a first sub-module configured to obtain, for each of the identifier lists, the one or more of the plurality of identifiers in the identifier list; and a second sub-module configured to determine the one or more of the plurality of identifiers in the identifier list to be the target identifiers associated with the one vehicle.

Optionally, the apparatus for processing vehicle data includes: a tenth module configured to display the plurality of vehicle keys as the vehicle keys of the one vehicle in a user interface in an aggregated manner.

A fourth aspect of examples of the invention provides an apparatus for processing vehicle data. The apparatus includes: a fourth module configured to receive a plurality of identifiers transmitted by a device, wherein the plurality of identifiers include vehicle identifiers defined under different vehicle key protocols; a fifth module configured to process the plurality of identifiers, and obtaining a processing result, wherein the processing result includes one or more relations between the plurality of identifiers, and the plurality of identifiers having the relation are the identifiers, defined under different vehicle key protocols, of the same vehicle; and a sixth module configured to transmit the processing result to the device.

Optionally, the fifth module includes: a third sub-module configured to determine, for each of the plurality of identifiers, a unique vehicle identifier associated with the identifier from a server of a vehicle; and a fourth sub-module configured to establish the one or more relations between the plurality of identifiers according to the unique vehicle identifier associated with each of the identifiers.

Optionally, the fourth sub-module includes: a first sub-unit configured to determine, for each of the identifiers, the unique vehicle identifier associated with the identifier, and obtain a target vehicle identifier; a second sub-unit configured to save, in response to determining that a target space exists in a storage space, the identifier into the target space; and a third sub-unit configured to create, in response to determining that the target space does not exist in the storage space, a new target space in the storage space, and save the identifier into the new target space, where the target space is configured to store an identifier associated with the target vehicle identifier.

Optionally, the fourth sub-module includes: a fourth sub-unit configured to obtain the identifier in the target space; and a fifth sub-unit configured to generate an identifier list of the target space according to the identifier in the target space. The one or more relations include the identifier list.

A fifth aspect of examples of the invention provides an apparatus for processing vehicle data. The apparatus includes: one or more processors; and a memory configured to store instructions executable by the one or more processors. The one or more processors are collectively configured to implement the method according to either of the first aspect and the second aspect.

A sixth aspect of examples of the invention provides a non-transitory computer-readable storage medium. The non-transitory computer-readable storage medium stores a computer program. When the computer program is executed by one or more processors, the method according to either of the first aspect and the second aspect is implemented.

A seventh aspect of examples of the invention provides a computer program product. The computer program product includes a computer program. When the computer program is executed by one or more processors, the method according to either of the first aspect and the second aspect is implemented.

In the solution, the plurality of identifiers may be obtained. The plurality of identifiers include vehicle identifiers defined under different vehicle key protocols. In addition, the plurality of identifiers may be transmitted to the server of the vehicle, and the processing result processed and transmitted by the server may be received. The processing result includes the one or more relations between the plurality of identifiers. The plurality of identifiers having the relation are the identifiers, defined under different vehicle key protocols, of the same vehicle. In this way, the relation between the plurality of identifiers can be determined by means of the server of the vehicle, such that the identifiers corresponding to same vehicle can be determined. Thus, vehicle key data of the vehicle can be managed conveniently.

It should be understood that the above general description and the following detailed description are merely illustrative and explanatory, instead of limiting the invention.

### BRIEF DESCRIPTION OF DRAWINGS

Accompanying drawings here are incorporated in the description as a constituent part of the description, illustrate examples conforming to the invention, and serve to describe principles of the invention together with the description.
Fig. 1 is a schematic diagram of storage of a vehicle identifier according to an example.
Fig. 2 is a flow diagram of a method for processing vehicle data according to an example.
Fig. 3 is a flow diagram of data processing according to an example.
Fig. 4 is a schematic diagram of an identifier storage structure in a vehicle factory cloud service according to an example.
Fig. 5 is a flow diagram of a method for processing vehicle data according to an example.
Fig. 6 is a flow diagram of a method for processing vehicle data according to an example.
Fig. 7 is a block diagram of an apparatus for processing vehicle data according to an example.
Fig. 8 is a block diagram of an apparatus for processing vehicle data according to an example.
Fig. 9 is a block diagram of an apparatus for processing vehicle data according to an example.
Fig. 10 is a block diagram of a server according to an example.

### DETAILED DESCRIPTION OF THE INVENTION

Examples will be described in detail here and shown in the accompanying drawings illustratively. When the following description involves the accompanying drawings, unless otherwise specified, the same number in different accompanying drawings denotes same or similar elements.

The embodiments described in some following examples of the invention do not denote all embodiments consistent with the invention. On the contrary, the embodiments are merely instances of an apparatus and a method consistent with some aspects of the invention as detailed in the appended claims.

It should be noted that all actions of obtaining signals, information or data in the invention are conducted under the premise of complying with corresponding data protection laws and policies of the current country and obtaining authorization from a corresponding apparatus owner.

Before a method and apparatus for processing vehicle data, a storage medium and a program product of the invention is introduced, related scenes of the examples of the invention will be introduced.

At present, digital vehicle keys have been widely used in various vehicle models. In some scenes, for protecting user data, a vehicle company is prohibited from sharing a real and unique vehicle identification number (vin) with a device manufacturer as generally stipulated in a vehicle key protocol. Thus, it is necessary to define a vehicle identifier in the protocol according to a certain rule and record the identifier as "vehicleld". The vehicleld may be used to identify a vehicle between the vehicle company and the device manufacturer under a digital vehicle key protocol.

For instance, assuming that there are two digital key protocols including a near field communication (NFC) digital vehicle key protocol A and a Bluetooth digital vehicle key protocol B, the following situations may occur:

In a case of the NFC digital vehicle key protocol A, for protecting user data, it is stipulated that a vehicle company is prohibited from sharing a real and unique vehicle identifier with a device manufacturer. Thus, vehicleld A is defined to identify a vehicle between the vehicle company and the device manufacturer under the digital vehicle key protocol A.

Similarly, in a case of the Bluetooth digital vehicle key protocol B, for protecting user data, vehicleld B is defined to identify a vehicle between the vehicle company and the device manufacturer under the digital vehicle key protocol B.

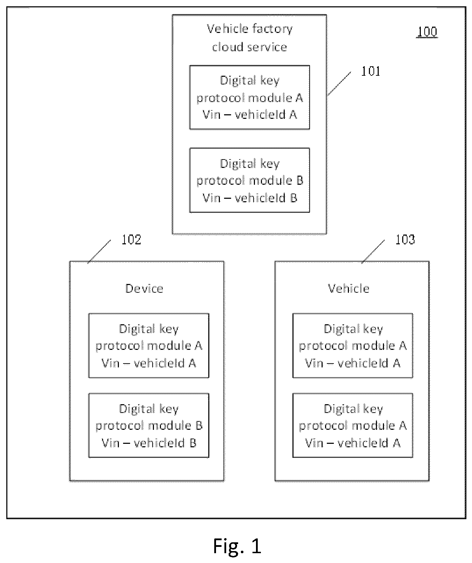

It is worth noting that one vehicle model is generally set by a vehicle company to be compatible with a wide range of digital vehicle key protocols, in a bid to make its vehicle compatible with devices on the market as much as possible. One device model is generally set by a device manufacturer to be compatible with a wide range of digital vehicle key protocols, in a bid to make its device compatible with different vehicles as much as possible. For instance, assuming that a device exists to support both the digital vehicle key protocol A and the digital vehicle key protocol B, a vehicle exists to support both the digital vehicle key protocol A and the digital vehicle key protocol B, and the device and the vehicle have a vehicle key relation with mutual trust under the two digital vehicle key protocols, with reference to a schematic diagram 100 of storage of a vehicle identifier shown in Fig. 1, vehicle identifiers stored in the vehicle 103, the device 102 and a vehicle factory cloud·service 101 are as shown in Fig. 1.

Specifically, the vehicle identifier may be generated by the vehicle factory cloud·service 101 in a vehicle production stage on the basis of a digital vehicle key protocol that the vehicle 103 may use in the future, and the vehicle identifier and a vehicle vin are associated and stored. For instance, in a case that a vehicle 103 may use both the digital vehicle key protocol A and the digital vehicle key protocol B, vehicleld A and vehicleld B may be generated according to corresponding protocols respectively, and a relation between the vehicleld A and a vehicle vin and an relation between the vehicleld B and a vehicle vin may be stored in different service modules.

In addition, in the vehicle production stage, vehicle identifiers of the vehicle 103 under different digital vehicle key protocol systems may be input by a production line in a flashed manner. For instance, in the vehicle production stage, the vehicleld A supporting a digital vehicle key protocol A system and the vehicleld B supporting a digital vehicle key protocol B system are input into the vehicle 103 in a flashed manner.

In addition, in a case that a device 102 establishes a vehicle key relation with mutual trust with a vehicle 103 under both the two protocols, the vehicle identifiers of the vehicle under different digital vehicle key protocols may be stored in the device 102. For instance, in a stage of creating a digital vehicle key pair, the device 102 may obtain the vehicleld A transmitted by the vehicle or the vehicle factory cloud·service 101, such that the device 102 and the vehicle 103 can achieve related functions under the digital vehicle key protocol A. The device 102 may obtain the vehicleld B transmitted by the vehicle 103 or the vehicle factory cloud·service 101, such that the device 102 and the vehicle 103 can achieve related functions under the digital vehicle key protocol B. It should be noted that the device 102 can hardly obtain a vehicle vin by considering security of user data.

In this way, through a vehicle identifier storage strategy in Fig. 1, the device 102 can achieve a related digital key function with the vehicle 103 under the digital vehicle key protocol A through the vehicleld A. The device 102 can achieve a related digital key function with the vehicle 103 under the digital vehicle key protocol B through the vehicleld B.

In some scenes, the vehicle key data may need to be managed. For instance, each vehicle key and a vehicle to which the vehicle key belongs may need to be displayed in a user interface of a user equipment. However, as the device 102 fails to obtain the vehicle vin, the device 102 can hardly determine vehicle keys belonging to the same vehicle. In this way, the device 102 may display each digital vehicle key corresponding to vehicles separately, such that the vehicle key data is difficult to manage, and further user experience may be reduced.

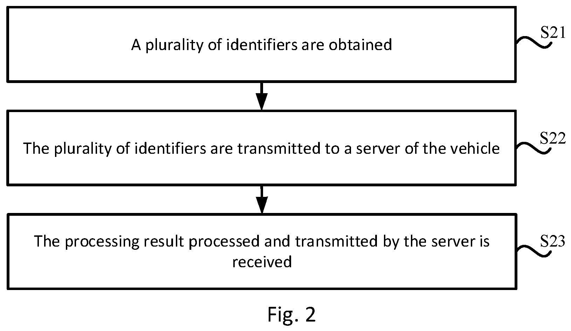

In view of that, an example of the invention provides a method for processing vehicle data. The method may be implemented by various devices, such as a mobile phone, a tablet device, a wearable device, or a combination of them. Fig. 2 is a flow diagram of a method for processing vehicle data according to an example of the invention. With reference to Fig. 2, the method includes the following steps S21 to S23.

In S21, a plurality of identifiers are obtained. The plurality of identifiers include vehicle identifiers, defined under different vehicle key protocols.

In an embodiment, identifiers of digital vehicle keys stored in a device may be inquired by the device, such that the plurality of identifiers are obtained.

In an embodiment, a target vehicle company may be determined by a device, and identifiers of digital vehicle keys stored in the device under the target vehicle company may be inquired, such that the plurality of identifiers are obtained.

With reference to Fig. 1, in some embodiments, the plurality of identifiers may include vehicleld A and vehicleld B.

In S22, the plurality of identifiers are transmitted to a server of the vehicle.

In some embodiments, the server may be, for instance, a vehicle factory cloud service shown in Fig. 1. The server may provide an interface for identifier association. In this way, the device (or a cloud service of a device manufacturer) may invoke the interface, such that one or more relations between the plurality of identifiers are determined. As an instance, an input parameter of the interface may be "vehicleldList", may be a parameter of a list type, and includes one or more vehiclelds. With a JavaScript Object Notation (JSON) form as an instance, in a case that the vehicleldList includes vehicleld1, vehicleld2 and vehicleld3, the input parameter may be expressed as:

```
 {
 "vehicleldList" : [
 "vehicleld1",
 "vehicleld2",
 "vehicleId3"
 ]
 }.
```

In this way, the server may conduct processing on the basis of the input parameter, and a processing result may be obtained. A processing process of the server is illustratively described.

In an embodiment, for each of the plurality of identifiers, a unique vehicle identifier associated with the identifier may be determined by the server from the server of the vehicle. Moreover, according to the unique vehicle identifier associated with each of the identifiers, the one or more relations between the plurality of identifiers is established.

With reference to Fig. 1, a relation between the vehicleld A and a vin and an relation between the vehicleld B and a vin are stored in the server. Thus, the server may determine whether the plurality of identifiers correspond to the same vehicle vin on the basis of the identifiers transmitted by the device, and establish the relation between the plurality of identifiers.

For instance, in an embodiment, the step that the one or more relations between the plurality of identifiers is established according to the unique vehicle identifier associated with each of the identifiers includes the following steps: for each of the identifiers, the unique vehicle identifier associated with the identifier is determined, and a target vehicle identifier is obtained; in response to determining that a target space exists in a storage space, the identifier is saved into the target space; and in response to determining that the target space does not exist in the storage space, a new target space is created in the storage space, and the identifier is saved into the new target space. The target space is configured to store an identifier associated with the target vehicle identifier.

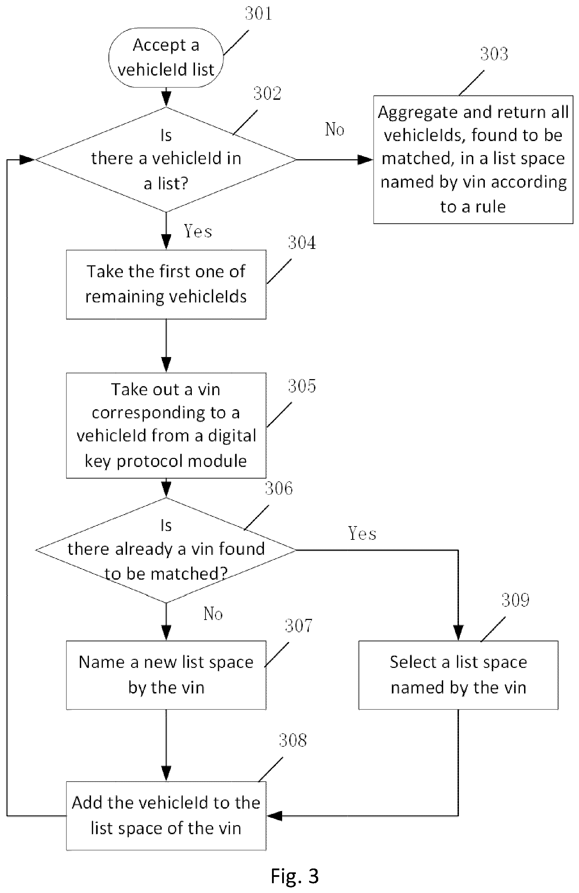

Fig. 3 is a flow diagram of data processing according to an example of the invention. With reference to Fig. 3, after receiving vehicleldList of vehiclelds (301), a server may conduct the following processing.

In a case that remaining vehicleld elements exist in the vehicleldList (302), a first (or any) vehicleld in the vehicleldList is retrieved (304). In addition, a corresponding vin may be retrieved through vehicleld query in a digital vehicle key protocol module managed by a vehicle factory cloud service (305).

If the vin is found for the first time (for example, the vin is never found to be matched before) during this time of interface invoking (306), a new list space (also referred to as a target space) is created for the vin and named by the vin (307). In this way, a vehicleld currently retrieved may be written into the new list space (308).

If the vin is not found for the first time (for example, the vin is found to be matched before) during this time of interface invoking (306), a list space named by the vin is searched for (309), and a vehicleld currently retrieved is written into a list storage space (308).

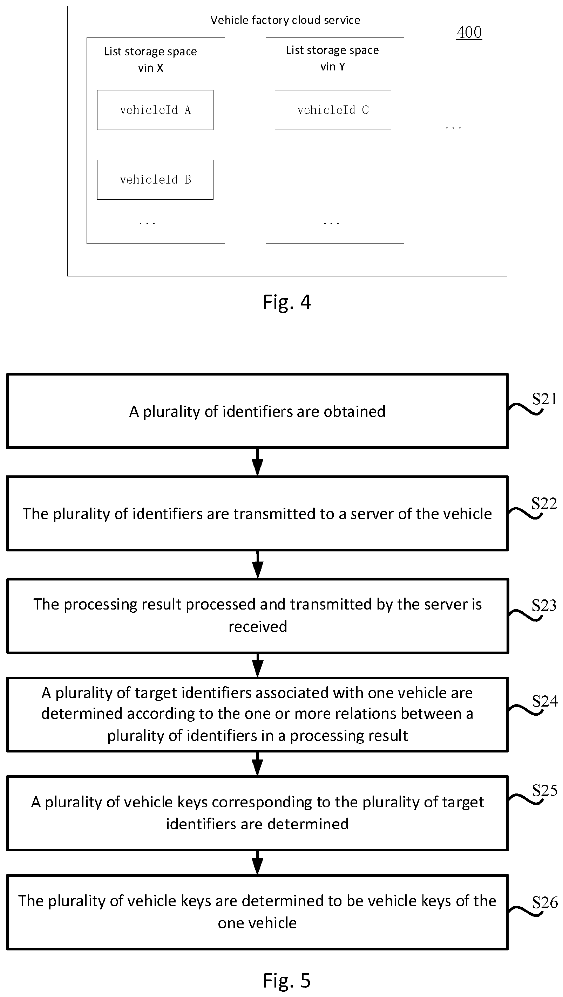

Fig. 4 is a schematic diagram of an identifier storage structure in a vehicle factory cloud service according to an example of the invention. With reference to Fig. 4, after processing according to the flow shown in Fig. 3, the vehicle factory cloud service 400 may store a list storage space vin X{vehicleld A, vehicleld B}, a list storage space vin Y{vehicleld C}, etc.

In this way, a relation between identifiers may be generated according to a rule, and a processing result may be output. For instance, with reference to Fig. 3, vehiclelds, found to be matched, in a list space named by a corresponding vin are aggregated according to a rule, and returned to be output (303).

As an instance, the server may obtain an identifier in a target space, and generate an identifier list of the target space according to the identifier in the target space. The relation includes the identifier list.

In an instance in Fig. 4, the vehicle factory cloud service 400 may obtain identifiers vehicleld A and vehicleld B in the list storage space vin X{vehicleld A, vehicleld B} and generate an identifier list [vehicleld A, vehicleld B] corresponding to the list storage space vin X. The identifier list (without vin information) indicates that the vehicleld A and the vehicleld B are identifiers, generated under different vehicle key protocols, of the same vehicle. That is, the vehicleld A and the vehicleld B correspond to the same vehicle.

Still, with reference to Fig. 2, in S23, the processing result processed and transmitted by the server is received. The processing result includes one or more relations between the plurality of identifiers. The plurality of identifiers having the relation are the identifiers, defined under different vehicle key protocols, of the same vehicle.

In the solution, the plurality of identifiers may be obtained. The plurality of identifiers include vehicle identifiers defined under different vehicle key protocols. In addition, the plurality of identifiers may be transmitted to the server of the vehicle, and the processing result processed and transmitted by the server may be received. The processing result includes the one or more relations between the plurality of identifiers. The plurality of identifiers having the relation are the identifiers, defined under different vehicle key protocols, of the same vehicle. In this way, the relation between the plurality of identifiers can be determined by means of the server of the vehicle, such that the identifiers corresponding to the same vehicle can be determined. Thus, vehicle key data of the vehicle can be managed conveniently.

Fig. 5 is a flow diagram of a method for processing vehicle data according to an example of the invention. With reference to Fig. 5, on the basis of Fig. 2, the method includes previously described steps S21-S23 and the following steps S24 to S26:

In S24, a plurality of target identifiers associated with one vehicle are determined according to the one or more relations between a plurality of identifiers in a processing result.

For instance, in an embodiment, the processing result includes one or more identifier lists. The identifier lists include one or more of the plurality of identifiers. Identifiers in the same identifier list are associated with the same vehicle. In this way, the step that the plurality of target identifiers associated with the one vehicle are determined according to the one or more relations between the plurality of identifiers in the processing result includes the following steps: for each of the identifier lists, identifiers in the identifier list are obtained; and the identifiers in the identifier list are determined to be the target identifiers associated with the one vehicle.

With an identifier list [vehicleld A, vehicleld B] as an instance, identifiers vehicleld A and vehicleld B may be obtained, and the vehicleld A and the vehicleld B may be determined to be the target identifiers associated with the same vehicle.

In S25, a plurality of vehicle keys corresponding to the plurality of target identifiers are determined.

In S26, the plurality of vehicle keys are determined to be vehicle keys of the one vehicle.

For instance, a digital vehicle key module is searched for according to the target identifier, such that a digital vehicle key corresponding to the target identifier may be determined, and the plurality of vehicle keys may be obtained. In this way, the plurality of vehicle keys may be determined to be the vehicle keys of the same vehicle.

In some embodiments, the plurality of vehicle keys may further be displayed as the vehicle keys of the same vehicle in a user interface in an aggregated manner. In this way, different from a mode that a device displays each digital vehicle key corresponding to vehicles separately, the solution can simplify a number of vehicles in the user interface and make a display result more accurate and rational through aggregated display.

In addition, it is worth noting that, in the solution, the processing result of a server includes the relation between the plurality of identifiers, and does not include specific vehicle vin information. Thus, security of vehicle data can be guaranteed. In addition, through the method of obtaining the processing result on the basis of the plurality of identifiers uploaded, the processing result does not involve other vehicle identifiers (such as identifiers of other car companies and reserved identifiers not enabled by the vehicle). Thus, data security can be guaranteed.

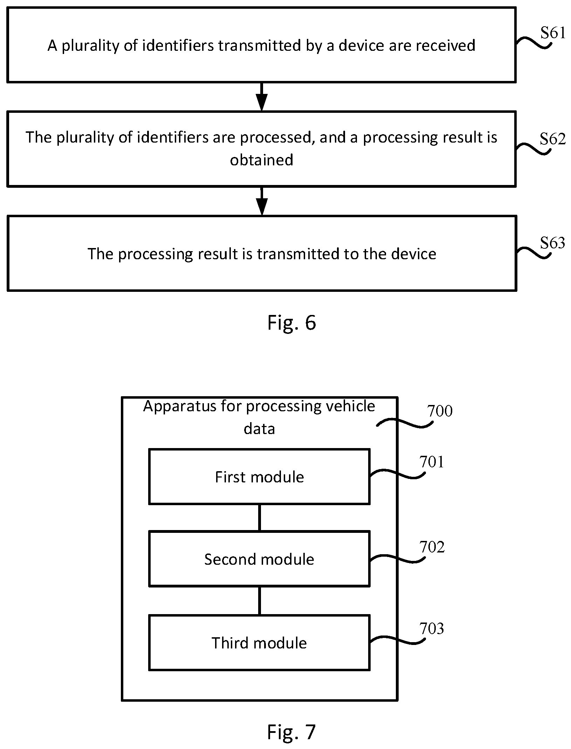

On the basis of the same inventive concept, an example of the invention provides a method for processing vehicle data. The method may be executed by a server. The server may be, for instance, the server in the examples. Fig. 6 is a flow diagram of a method for processing vehicle data according to an example of the invention. With reference to Fig. 6, the method includes the following steps S61 to S63.

In S61, a plurality of identifiers transmitted by a device are received. The plurality of identifiers include vehicle identifiers, defined under different vehicle key protocols.

In S62, the plurality of identifiers are processed, and a processing result is obtained. The processing result includes one or more relations between the plurality of identifiers. The plurality of identifiers having the relation are the identifiers, defined under different vehicle key protocols, of the same vehicle.

In an embodiment, the step that the plurality of identifiers are processed includes the following steps: for each of the plurality of identifiers, a unique vehicle identifier associated with the identifier is determined from the server of the vehicle; and the one or more relations between the plurality of identifiers are established according to the unique vehicle identifier associated with each of the identifiers.

In an embodiment, the step that the one or more relations between the plurality of identifiers are established according to the unique vehicle identifier associated with each of the identifiers includes the following steps: for each of the identifiers, the unique vehicle identifier associated with the identifier is determined, and a target vehicle identifier is obtained; in response to determining that a target space exists in a storage space, the identifier is saved into the target space; and in response to determining that the target space does not exist in the storage space, a new target space is created in the storage space, and the identifier is saved into the target space. The target space is configured to store an identifier associated with the target vehicle identifier.

In an embodiment, the step that the one or more relations between the plurality of identifiers are established according to the unique vehicle identifier associated with each of the identifiers includes the following steps: the identifier in the target space is obtained; and an identifier list of the target space is generated according to the identifier in the target space. The one or more relations include the identifier list.

In S63, the processing result is transmitted to the device.

Related embodiments of S61 to S63 are described in detail in the examples related to Figs. 2-5, and will not be repeated here for the purpose of brevity.

In the solution, the plurality of identifiers may be obtained. The plurality of identifiers include vehicle identifiers defined under different vehicle key protocols. In addition, the plurality of identifiers may be transmitted to the server of the vehicle, and the processing result processed and transmitted by the server may be received. The processing result includes the one or more relations between the plurality of identifiers. The plurality of identifiers having the relation are the identifiers, defined under different vehicle key protocols, of the same vehicle. In this way, the relation between the plurality of identifiers can be determined by means of the server of the vehicle, such that the identifiers corresponding to the same vehicle can be determined. Thus, vehicle key data of the vehicle can be managed conveniently.

On the basis of the same inventive concept, an example of the invention provides an apparatus for processing vehicle data. Fig. 7 is a block diagram of an apparatus for processing vehicle data 700 according to an example of the invention. With reference to Fig. 7, the apparatus for processing vehicle data 700 includes a first module 701, a second module 702 and a third module 703.

The first module 701 is configured to obtain a plurality of identifiers, where the plurality of identifiers include vehicle identifiers, defined under different vehicle key protocols.

The second module 702 is configured to transmit the plurality of identifiers to a server of the vehicle.

The third module 703 is configured to receive a processing result processed and transmitted by the server, where the processing result includes one or more relations between the plurality of identifiers, and the plurality of identifiers having the relation are the identifiers, defined under different vehicle key protocols, of the same vehicle.

Thus, on the basis of the apparatus for processing vehicle data 700, the relation between the plurality of identifiers can be determined by means of the server of the vehicle, such that the identifiers corresponding to the same vehicle can be determined. In this way, vehicle key data of the vehicle can be managed conveniently.

Optionally, the apparatus for processing vehicle data 700 includes: a seventh module (not shown) configured to determine a plurality of target identifiers associated with one vehicle according to the one or more relations between the plurality of identifiers in the processing result; an eighth module (not shown) configured to determine a plurality of vehicle keys corresponding to the plurality of target identifiers; and a ninth module (not shown) configured to determine the plurality of vehicle keys to be vehicle keys of the one vehicle.

Optionally, the processing result includes one or more identifier lists. The identifier lists include one or more of the plurality of identifiers. Identifiers in the same identifier list are associated with the same vehicle. The seventh module (not shown) includes: a first sub-module configured to obtain, for each of the identifier lists, identifiers in the identifier list; and a second sub-module configured to determine the identifiers in the identifier list to be the target identifiers associated with the one vehicle.

Optionally, the apparatus for processing vehicle data 700 includes a tenth module (not shown) configured to display the plurality of vehicle keys as the vehicle keys of the one vehicle in a user interface in an aggregated manner.

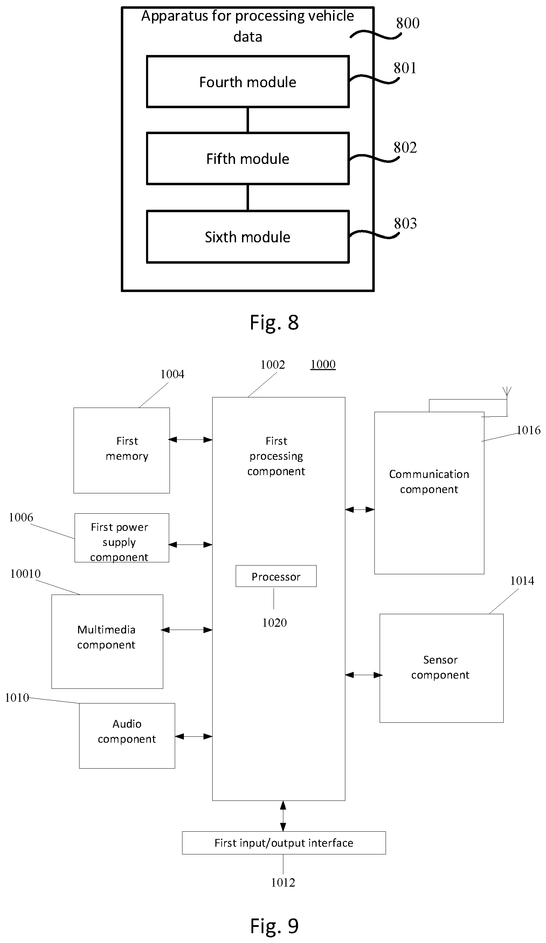

On the basis of the same inventive concept, an example of the invention provides an apparatus for processing vehicle data. Fig. 8 is a block diagram of an apparatus for processing vehicle data 800 according to an example of the invention. With reference to Fig. 8, the apparatus for processing vehicle data 800 includes a fourth module 801, a fifth module 802, and a sixth module 803.

The fourth module 801 is configured to receive a plurality of identifiers transmitted by a device, where the plurality of identifiers include vehicle identifiers, defined under different vehicle key protocols.

The fifth module 802 is configured to process the plurality of identifiers, and obtain a processing result, where the processing result includes one or more relations between the plurality of identifiers, and the plurality of identifiers having the relation are the identifiers, defined under different vehicle key protocols, of the same vehicle.

The sixth module 803 is configured to transmit the processing result to the device.

In the solution, the plurality of identifiers may be obtained. The plurality of identifiers include vehicle identifiers defined under different vehicle key protocols. In addition, the plurality of identifiers may be transmitted to the server of the vehicle, and the processing result processed and transmitted by the server may be received. The processing result includes the one or more relations between the plurality of identifiers. The plurality of identifiers having the relation are the identifiers, defined under different vehicle key protocols, of the same vehicle. In this way, the relation between the plurality of identifiers can be determined by means of the server of the vehicle, such that the identifiers corresponding to the same vehicle can be determined. Thus, vehicle key data of the vehicle can be managed conveniently.

Optionally, the fifth module 802 includes: a third sub-module (not shown) configured to determine, for each of the plurality of identifiers, a unique vehicle identifier associated with the identifier from a server of the vehicle; and a fourth sub-module (not shown) configured to establish the one or more relations between the plurality of identifiers according to the unique vehicle identifier associated with each of the identifiers.

Optionally, the fourth sub-module includes: a first sub-unit configured to determine, for each of the identifiers, the unique vehicle identifier associated with the identifier, and obtain a target vehicle identifier; a second sub-unit configured to save, in response to determining that a target space exists in a storage space, the identifier into the target space; and a third sub-unit configured to create, in response to determining that the target space does not exist in the storage space, a new target space in the storage space, and save the identifier into the new target space, where the target space is configured to store an identifier associated with the target vehicle identifier.

Optionally, the fourth sub-module includes: a fourth sub-unit configured to obtain the identifier in the target space; and a fifth sub-unit configured to generate an identifier list of the target space according to the identifier in the target space. The one or more relations include the identifier list.

An example of the invention provides an apparatus for processing vehicle data, for example as shown in FIGS. 7 and/or 8. The apparatus includes: one or more processors; and a memory configured to store instructions executable by the one or more processors.

The one or more processors are collectively configured to implement the method for processing vehicle data according to any one of the examples of the invention, and the recited modules are portions of the processor.

An example of the invention provides a non-transitory computer-readable storage medium storing a computer program. When the computer program is executed by one or more processors, the method for processing vehicle data according to any one of the examples of the invention is implemented.

An example of the invention provides a computer program product. The computer program product includes a computer program. When the computer program is executed by one or more processors, the method for processing vehicle data according to any one of the examples of the invention is implemented.

For the apparatus for processing vehicle data in the examples, a specific method for each module to execute operation is described in detail in the examples relating to the method for processing vehicle data, which will not be described in detail here.

Fig. 9 is a block diagram of an apparatus 1000 for processing vehicle data according to an example. For instance, the apparatus 1000 may be a mobile phone, a computer, a tablet device, a wearable device, etc.

With reference to Fig. 9, the apparatus 1000 may include one or more of the following components: a first processing component 1002, a first memory 1004, a first power supply component 1006, a multimedia component 10010, an audio component 1010, a first input/output (I/O) interface 1012, a sensor component 1014, and a communication component 1016.

The first processing component 1002 generally controls all operation of the apparatus 1000, such as operation associated with display, telephone call, data communication, camera operation and recording operation. The first processing component 1002 may include one or more processors 1020 configured to execute instructions, so as to complete all steps or some steps of the method for processing vehicle data. In addition, the first processing component 1002 may include one or more modules to facilitate interaction between the first processing component 1002 and other components. For instance, the first processing component 1002 may include a multimedia module to facilitate interaction between the multimedia component 10010 and the first processing component 1002.

The first memory 1004 is configured to store various types of data, so as to support the operation on the apparatus 1000. Instances of the data include instructions for any application or method operating on the apparatus 1000, contact data, phone book data, a message, a picture, a video, etc. The first memory 1004 may be implemented by any type of volatile or nonvolatile memory device or their combinations, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic disk, or an optical disk.

The first power supply component 1006 supplies power to various components of the apparatus 1000. The first power supply component 1006 may include a power management system, one or more power supplies, and other components associated with generating, managing and distributing power for the apparatus 1000.

The multimedia component 10010 includes a screen that provides an output interface between the apparatus 1000 and a user. In some examples, the screen may include a liquid crystal display (LCD) and a touch panel (TP). If the screen includes the touch panel, the screen may be implemented as a touch screen to receive an input signal from the user. The touch panel includes one or more touch sensors to sense touch, slide and gestures on the touch panel. The touch sensor may sense a boundary of touch or slide operation, and detect duration and pressure related to the touch or slide operation. In some examples, the multimedia component 10010 includes a front-facing camera and/or a rear-facing camera. When the apparatus 1000 is in an operation mode, such as a photographing mode or a video mode, the front-facing camera and/or the rear-facing camera may receive external multimedia data. Each of the front-facing camera and the rear-facing camera may be a fixed optical lens system or have a focal length and an optical zoom capability.

The audio component 1010 is configured to output and/or input an audio signal. For instance, the audio component 1010 includes a microphone (MIC). The microphone is configured to receive an external audio signal when the apparatus 1000 is in operation modes such as a call mode, a recording mode and a speech identification mode. The received audio signal may be further stored in the first memory 1004 or transmitted via the communication component 1016. In some examples, the audio component 1010 further includes a speaker configured to output an audio signal.

The first input/output interface 1012 provides an interface between the first processing component 1002 and a peripheral interface module (not shown). The peripheral interface module may be a keyboard, a click wheel, a button, etc. The buttons may include, but are not limited to, a home button, a volume button, a start button, and a lock button.

The sensor component 1014 includes one or more sensors configured to provide various aspects of state assessment for the apparatus 1000. For instance, the sensor component 1014 may detect an on/off state of the apparatus 1000 and relative positioning of the assemblies such as a display and a keypad of the apparatus 1000, and the sensor component 1014 may further detect position change of the apparatus 1000 or a component of the apparatus 1000, presence or absence of contact between the user and the apparatus 1000, an orientation or acceleration/deceleration of the apparatus 1000 and temperature change of the apparatus 1000. The sensor component 1014 may include a proximity sensor configured to detect presence of a nearby object without any physical contact. The sensor component 1014 may further include an optical sensor, such as a complementary metal-oxide-semiconductor (CMOS) or charge-coupled device (CCD) image sensor, which is used in an imaging application. In some examples, the sensor component 1014 may further include an acceleration sensor, a gyroscope sensor, a magnetic sensor, a pressure sensor, or a temperature sensor.

The communication component 1016 is configured to facilitate wired or radio communication between the apparatus 1000 and other devices. The apparatus 1000 may access a wireless network based on a communication standard, such as WiFi, the 4th generation mobile communication technology (4G) or the 5th generation mobile communication technology (5G), or their combinations. In an example, the communication component 1016 receives a broadcast signal or broadcast related information from an external broadcast management system via a broadcast channel. In an example, the communication component 1016 further includes a near field communication (NFC) module to facilitate short-range communication. For instance, the NFC module may be implemented on the basis of a radio frequency identification (RFID) technology, an infrared data association (IrDA) technology, an ultra wide band (UWB) technology, a Bluetooth (BT) technology or other technologies.

In an example, the apparatus 1000 may be implemented by one or more of an application specific integrated circuit (ASIC), a digital signal processor (DSP), a digital signal processing device (DSPD), a programmable logic device (PLD), a field programmable gate array (FPGA), a controller, a microcontroller, a microprocessor or other electronic elements, thus implementing the method for processing vehicle data.

An example further provides a non-transitory computer-readable storage medium including instructions, such as the first memory 1004 including instructions. The instructions may be executed by the processor 1020 of the apparatus 1000 so as to complete the method for processing vehicle data. For instance, the non-transitory computer-readable storage medium may be an ROM, a random access memory (RAM), a compact disc-read only memory (CD-ROM), a magnetic tape, a floppy disk, an optical data storage device, etc.

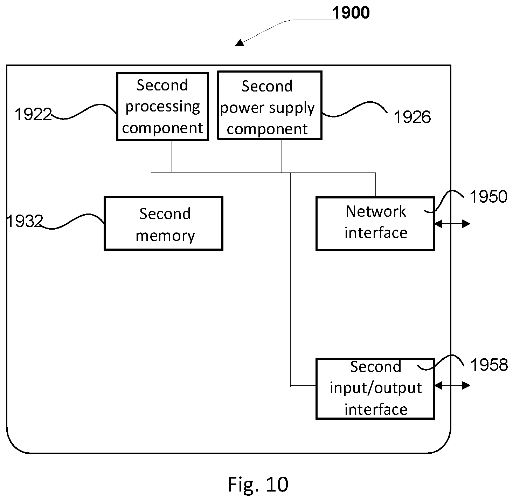

Fig. 10 is a block diagram of a server 1900 according to an example. For instance, the server 1900 may be provided as a vehicle factory server. With reference to Fig. 10, the server 1900 includes a second processing component 1922, which further includes one or more processors (not shown), and a memory resource represented by a second memory 1932, which is configured to store instructions executable by the second processing component 1922, such as an application. The application (not shown) stored in the second memory 1932 may include one or more modules (such as those described herein) that each correspond to a group of instructions. In addition, the second processing component 1922 is configured to execute the instructions, so as to implement the method for processing vehicle data.

The server 1900 may further include a second power supply component 1926 configured to execute power management of the server 1900, a wired or radio network interface 1950 configured to connect the server 1900 to a network, and a second input/output (I/O) interface 1958. The server 1900 may operate an operating system stored in the second memory 1932, such as Windows Server^{™}, Mac OS X^{™}, Unix^{™}, Linux^{™}, and FreeBSD^{™}.

Further, the word "illustrative" is used here to indicate a typical instance, an instance, and a diagram. Any aspect or design described here as "illustrative" is not necessarily understood as advantageous over other aspects or designs. On the contrary, words are used to illustratively present concepts in a concrete way. As used here, the term "or" is intended to indicate inclusive "or" rather than exclusive "or". That is, unless otherwise specified or clear from the context, "X is applied to A or B" is intended to indicate any one of natural inclusive arrangements. That is, if X is applied to A, X is applied to B, or X is applied to both A and B, "X is applied to A or B" is satisfied in any one of the above instances. In addition, the articles "a", "an" and "one" as used in the disclosure and the appended claims are generally understood to indicate "one or more" unless otherwise specified or clearly pointed out from the context.

Likewise, although the invention is shown and described with respect to one or more implementations, those skilled in the art could conceive of equivalent variations and modifications after reading and understanding the description and the accompanying drawings. The invention includes all such modifications and variations, and is limited only by the scope of the claims. Particularly, for various functions executed by the components (for instance, elements, resources, etc.), unless otherwise indicated, the terms used to describe such components are intended to correspond to any component (functionally equivalent) that executes a specified function of the described component, even if the component is not structurally equivalent to the disclosed structure. In addition, although a particular feature of the invention can be disclosed with respect to only one of several implementations, such a feature can be combined with one or more other features of other implementations as desired and advantageous for any given or specific application. Further, the terms "include", "comprise", "have", "with" or their variations used in specific embodiments or claims are intended to be inclusive like the term "encompass".

It should be understood that features of various examples of the invention described here can be combined with each other unless otherwise specified. As used here, the term "and/or" includes any one of related listed items and any combination of any two or more of related listed items. Similarly, "at least one of ..." includes any one of related listed items and any combination of any two or more of related listed items.

Although the terms such as "first", "second" and "third" can be used here to describe various members and components, the members and components are not limited to the terms. On the contrary, the terms are only used to distinguish one member and component from another. Thus, a first member, component and module mentioned in the instances described here can also be referred to as a second member, component and module without departing from the teaching of each instance. In addition, terms "first" and "second" are merely for descriptive purposes and are not to be construed as indicating or implying their relative importance or implicitly specifying the number of indicated technical features. Thus, a feature defined with "first" and "second" can explicitly or implicitly include at least one of the features. In the description, "a plurality of" indicates at least two, and for instance, two or three, unless expressly specified otherwise.

Those skilled in the art could easily conceive of other implementation solutions of the invention upon consideration of the description and the invention disclosed here. The description and the examples are regarded as merely illustrative, and the scope of the invention is indicated by the appended claims.

## Claims

1. A method for processing vehicle data, comprising:
obtaining (S21) a plurality of identifiers, wherein the plurality of identifiers comprise vehicle identifiers defined under different vehicle key protocols;
transmitting (S22) the plurality of identifiers to a server of a vehicle; and
receiving (S23) a processing result processed and transmitted by the server, wherein the processing result comprises one or more relations between the plurality of identifiers,
wherein the plurality of identifiers having the relation are identifiers, defined under different vehicle key protocols, of the same vehicle.

2. The method according to claim 1, further comprising:
determining (S24) a plurality of target identifiers associated with one vehicle according to the one or more relations between the plurality of identifiers in the processing result;
determining (S25) a plurality of vehicle keys corresponding to the plurality of target identifiers; and
determining (S26) the plurality of vehicle keys to be vehicle keys of the one vehicle.

3. The method according to claim 2, wherein
the processing result comprises one or more identifier lists, the identifier lists comprise one or more of the plurality of identifiers, and the one or more of the plurality of identifiers in the same identifier list are associated with the same vehicle, and
determining (S24) the plurality of target identifiers associated with the one vehicle according to the one or more relations between the plurality of identifiers in the processing result comprises:
obtaining, for each of the identifier lists, the one or more of the plurality of identifiers in the identifier list; and
determining the one or more of the plurality of identifiers in the identifier list to be the target identifiers associated with the one vehicle.

4. The method according to claim 2 or 3, further comprising:
displaying the plurality of vehicle keys as the vehicle keys of the one vehicle in a user interface in an aggregated manner.

5. A method for processing vehicle data, comprising:
receiving (S61) a plurality of identifiers transmitted by a device, wherein the plurality of identifiers comprise vehicle identifiers defined under different vehicle key protocols;
processing (S62) the plurality of identifiers, and obtaining a processing result, wherein the processing result comprises one or more relations between the plurality of identifiers, and the plurality of identifiers having the relation are identifiers, defined under different vehicle key protocols, of the same vehicle; and
transmitting (S63) the processing result to the device.

6. The method according to claim 5, wherein processing (S62) the plurality of identifiers comprises:
determining, for each of the plurality of identifiers, a unique vehicle identifier associated with the identifier from a server of a vehicle; and
establishing the one or more relations between the plurality of identifiers according to the unique vehicle identifier associated with each of the identifiers.

7. The method according to claim 6, wherein establishing the one or more relations between the plurality of identifiers according to the unique vehicle identifier associated with each of the identifiers comprises:
determining, for each of the identifiers, the unique vehicle identifier associated with the identifier, and obtaining a target vehicle identifier;
saving, in response to determining that a target space exists in a storage space, the identifier into the target space; and
creating, in response to determining that the target space does not exist in the storage space, a new target space in the storage space, and saving the identifier into the new target space, wherein the target space is configured to store an identifier associated with the target vehicle identifier.

8. The method according to claim 7, wherein establishing the one or more relations between the plurality of identifiers according to the unique vehicle identifier associated with each of the identifiers comprises:
obtaining the identifier in the target space; and
generating an identifier list of the target space according to the identifier in the target space, and
wherein the one or more relations comprise the identifier list.

9. An apparatus (700) for processing vehicle data, comprising:
a first module (701) configured to obtain a plurality of identifiers, wherein the plurality of identifiers comprise vehicle identifiers defined under different vehicle key protocols;
a second module (702) configured to transmit the plurality of identifiers to a server of a vehicle; and
a third module (703) configured to receive a processing result processed and transmitted by the server, wherein the processing result comprises one or more relations between the plurality of identifiers, wherein the plurality of identifiers having the relation are identifiers, defined under different vehicle key protocols, of the same vehicle.

10. An apparatus (800) for processing vehicle data, comprising:
a fourth module (801) configured to receive a plurality of identifiers transmitted by a device, wherein the plurality of identifiers comprise vehicle identifiers defined under different vehicle key protocols;
a fifth module (802) configured to process the plurality of identifiers, and obtain a processing result, wherein the processing result comprises one or more relations between the plurality of identifiers, and the plurality of identifiers having the relation are identifiers, defined under different vehicle key protocols, of the same vehicle; and
a sixth module (803) configured to transmit the processing result to the device.

11. The apparatus (700) according to claim 9, comprising:
a seventh module configured to determine a plurality of target identifiers associated with one vehicle according to the one or more relations between the plurality of identifiers in the processing result;
an eighth module configured to determine a plurality of vehicle keys corresponding to the plurality of target identifiers; and
a ninth module configured to determine the plurality of vehicle keys to be vehicle keys of the one vehicle.

12. The apparatus (700) according to claim 10, wherein the processing result comprises one or more identifier lists, the identifier lists comprise one or more of the plurality of identifiers, and the one or more of the plurality of identifiers in the same identifier list are associated with the same vehicle, and the seventh module comprises:
a first sub-module configured to obtain, for each of the identifier lists, the one or more of the plurality of identifiers in the identifier list; and
a second sub-module configured to determine the one or more of the plurality of identifiers in the identifier list to be the target identifiers associated with the one vehicle.

13. The apparatus (700) according to claim 12 or 13, further comprising:
a tenth module configured to display the plurality of vehicle keys as the vehicle keys of the one vehicle in a user interface in an aggregated manner.

14. A non-transitory computer-readable storage medium, storing a computer program, wherein when the computer program is executed by one or more processors, the method according to any one of claims 1-8 is implemented.

15. A computer program product, comprising a computer program, wherein when the computer program is executed by one or more processors, the method according to any one of claims 1-8 is implemented.
